(19) Europäisches Patentamt
European Patent Office
Office européen des brevets

(11) **EP 2 982 869 A1**

(12) **EUROPEAN PATENT APPLICATION**

(43) Date of publication:
**10.02.2016 Bulletin 2016/06**

(51) Int Cl.:
*F15D 1/00* (2006.01) *H02K 44/12* (2006.01)
*H02K 44/04* (2006.01)

(21) Application number: **14306262.8**

(22) Date of filing: **08.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Enright, Ryan**
**Dublin, 15 (IE)**

(74) Representative: **Coghlan, Judith Elizabeth Kensy et al**
**Script IP Limited**
**Turnpike House**
**18 Bridge Street**
**Frome BA11 1BB (GB)**

(54) **Magnetohydrodynamic device**

(57)    Aspects and embodiments relate to a magnetohydrodynamic device and a method of providing such a device. The magnetohydrodynamic fluid device comprises: a conduit for a flow of magnetohydrodynamic fluid therethrough under a magnetic field. The conduit has an inner surface adjacent the flow of magnetohydrodynamic fluid. The inner surface comprises: a plurality of structures dimensioned to induce apparent slip between the inner surface and the flow of magnetohydrodynamic fluid through the conduit. Aspects and embodiments may enable better performance and efficiency of liquid metal based pumps and energy harvesters using the MHD principle.

FIG. 1B

EP 2 982 869 A1

## Description

FIELD OF THE INVENTION

The present invention relates to a magnetohydrodynamic device and a method of providing such a device.

BACKGROUND

Reliable thermal management is a key aspect in the operation of telecommunications equipment including both photonic and electronic equipment. In liquid-cooled thermal management approaches reliability is generally limited by the pumps used to circulate the working fluid around the cooling loop. This is due to the fact that pump designs incorporate mechanical moving parts. Thus, techniques for efficiently pumping cooling fluids without mechanical moving parts are desirable. In particular, the magnetohydrodynamic (MHD) phenomenon can be used to provide highly reliable *solid-state* pumping, thus avoiding the use of pumping mechanism that rely on moving parts. The primary requirement for an MHD pump working fluid is electrically conductive. Examples include water containing ions, ionic liquids (liquid salts) and liquid metals. Specifically, liquid-metal-based cooling has recently received renewed interest due to the development of alloys that remain in the liquid state down to temperatures of -19 °C, i.e., galinstan, making it suitable for telecommunication applications. Due to the large thermal conductivity of galinstan (~16x that of water) and relatively low viscosity (only 3x larger than water), liquid metal cooling has the potential to provide highly efficient cooling.

SUMMARY

A first aspect provides a magnetohydrodynamic fluid device comprising: a conduit for a flow of magnetohydrodynamic fluid therethrough under a magnetic field; the conduit having an inner surface adjacent the flow of magnetohydrodynamic fluid, the inner surface comprising a plurality of structures dimensioned to induce apparent slip between the inner surface and the flow of magnetohydrodynamic fluid through the conduit.

The first aspect recognises that it is possible to use a magnetohydrodynamic (MHD) fluid in various devices. One example of a device comprises a MHD pump arranged to perform a cooling function. One example of such a device is presented by Ghoshal et al.- High-Performance Liquid Metal Cooling Loops - 21st IEEE SEMI-THERM Symposium. Such a MHD pump demonstrates good pumping performance with a small pump form factor, suitable for integration at a printed circuit board level. Such a pump may be suited to use in cooling applications for telecommunications equipment. The first aspect recognises that pumping performance and thus efficiency of a MHD device including MHD fluid flow through conduit or a pipe is limited by a fluid no-slip boundary condition on conduit walls perpendicular to a fixed magnetic field applied to the MHD fluid. The no-slip boundary condition introduces significant viscous shearing losses due to the confinement of large velocity gradients near the wall. Those large velocity gradients are characteristic of liquid metal MHD flows in a moderate to large Hartmann number MHD fluid flow regime. The first aspect recognises that shearing losses negatively impact MHD device performance and efficiency.

A first aspect may provide a magnetohydrodynamic fluid device. That device may form part, for example, of a printed circuit board or other electronic component.

The device may comprise: a magnetic element configured to generate a magnetic field arranged perpendicular to said flow of magnetohydrodynamic fluid through said conduit. The device may comprise: a magnetic field arranged perpendicular to a flow of magnetohydrodynamic fluid through a conduit. The magnetic field may be a fixed, or variable magnetic field. The device may accordingly comprise: a fixed magnet or electromagnet arranged to provide the magnetic field.

The conduit may have an inner surface adjacent the flow of magnetohydrodynamic fluid. The conduit may comprise a pipe or other channel. The conduit may be substantially elongate. The conduit may comprise side walls and a top and bottom wall. The conduit may have a pair of opposing walls of greater area than another pair of opposing walls. The conduit may comprise major walls having an area several orders of magnitude greater than that of the side walls. The area of potential contact between the MHD fluid and the major walls may be several orders of magnitude greater than those of the side walls. Such a large area may allow the device to be usefully used as a heat transfer device. Accordingly, a large area of MHD fluid can be used to transport heat energy to or from a region efficiently.

The inner surface of the conduit may comprise: a plurality of structures dimensioned to induce apparent slip between the inner surface and the flow of magnetohydrodynamic fluid through the conduit. The dimension of the structures may, for example, include the physical extent of each structure, for example, the length, breadth and/or height of each structure, and/or the spacing between adjacent structures. It will be appreciated that, depending upon, for example, the nature of the MHD fluid, the pressure of the MHD fluid, the macro dimensions of the conduit through which the MHD fluid flows and the material(s) from which the structures and conduit are formed, the dimensions of the structures which may cause apparent slip may be subject to change. The dimensions are therefore chosen in dependence upon a particular envisaged device configuration.

Furthermore, in order to ensure consistent operation of the device, it may be desired to ensure the MHD fluid flow through the device comprises a Hartmann flow. The stability of the flow may be balanced against the apparent slip caused by the structures provided on the inner surface of a conduit through which the MHD fluid passes.

In one embodiment, the plurality of structures comprise: an element extending from the inner surface. Accordingly, the structures may be provided such that the inner surface of the conduit is not substantially smooth. As a result, direct contact between the inner surface of the conduit and the MHD fluid may be minimised, and the no slip boundary condition can be eased.

In one embodiment, the plurality of structures are dimensioned to support the magnetohydrodynamic fluid upon the elements extending from the inner surface, such that the magnetohydrodynamic fluid is prevented from forming a continuous contact interface with the inner surface. Accordingly, at a small scale, the MHD fluid is supported such that it flows on the surface of the elements, rather than making contact with the smooth inner surface of an unchanged conduit.

In one embodiment, the apparent slip between the inner surface and the flow of magnetohydrodynamic fluid through the conduit is induced by dimensioning the plurality of structures such that the magnetohydrodynamic fluid remains in direct contact with only part of the inner surface. In other words, at a small scale, the MHD fluid is supported such that it flows on the surface of the plurality of appropriately dimensioned structures, rather than making contact with a smooth, unadulterated, structure-free inner surface of an unchanged conduit.

In one embodiment, the plurality of structures are dimensioned in dependence upon wetting properties of the magnetohydrodynamic fluid arranged to flow through the conduit. It will be appreciated that the wetting properties of the MHD fluid flowing through a conduit are likely to be of relevance to the appropriate dimensions of the structures provided.

In one embodiment, the plurality of structures are spaced apart in dependence upon pressure exerted on said inner surface by the flow of magnetohydrodynamic fluid through the conduit. It has been recognised that some embodiments may be configured to further improve MHD device performance and operation. According to such arrangements, the apparent slip structures may be designed or arranged on a surface to have a varying length scale, that varying length scale being selected to match pressure conditions experienced by an MHD fluid along the conduit. Accordingly, at an entrance to a conduit where pressure maybe low, the provided structures can have a larger spacing ($l$) to provide a larger apparent slip length. Towards the end of the conduit, where pressures may reach a maximum, the structures can be spaced closer together to prevent surface wetting. The structure spacing can be gradually varying or may be changed in one or more discrete steps along the length of the conduit.

In one embodiment, the plurality of structures comprise: a raised or lowered portion of the inner surface. In one embodiment, the portion comprises an elongate ridge having an axis substantially parallel to the flow of magnetohydrodynamic fluid through the conduit. In one embodiment, the portion comprises: a column extending from the inner surface.

Aspects and embodiments recognise that MHD fluid conduits for inclusion in MHD devices can be provided to have various structures which are arranged to allow for slip at the interface between the MHD fluid and the conduit surface. In one embodiment, at least one of the plurality of structures dimensioned to induce apparent slip between the inner surface and the flow of magnetohydrodynamic fluid through the conduit, comprises a portion in direct contact with the magnetohydrodynamic fluid, the portion comprising an oxide of the magnetohydrodynamic fluid. In some embodiments, appropriately dimensioned and spaced structures are provided on a conduit surface. Those structures can be pillars, ridges, dots, elongate elements and similar and may comprise a combination of different structures.

In one embodiment, at least one of the plurality of structures dimensioned to induce apparent slip between the inner surface and the flow of magnetohydrodynamic fluid through the conduit, comprises a portion in direct contact with the magnetohydrodynamic fluid, the portion comprising a material selected to react with the magnetohydrodynamic fluid to form an intermetallic portion. In some embodiments, the tops of at least some of the provided conduit surface structures may be coated with a thin layer of an appropriate oxide or inter metallic. For example, if the MHD fluid for use with a device is galinstan, the "tip" of at least some of the provided structures may comprise galinstan oxide or a metal that reacts with galinstan to form an inter-metallic. Provision of such an additional coating on at least some structure tips can act to induce a local receding contact less than 90° between the MHD fluid and the structure and fluid interface. Such an arrangement may act to stabilize the wetting state of the composite conduit surface against pressures in an inert gas or liquid layer trapped between the MHD fluid and the provided structures which is larger than that of the pressure of the MHD fluid flow.

In some embodiments, the surfaces, for example, sides and base, of each provided primary structural feature forming part of the composite conduit surface may be coated with a smaller length scale roughness features. Those roughness features may be configured such that they generate large apparent contact angles and stabilize the fluid wetting state when subjected to pressures in the MHD fluid flow larger than the pressure in any provided trapped inert gas or liquid layer.

In one embodiment, the device further comprises: an inert gas or fluid arranged between the plurality of structures. In some embodiments, a conduit may be structured such that an inert gas layer can be trapped between the surface of the MHD fluid conduit wall and the MHD fluid itself to generate an apparent slip. In some embodiments, the inert gas can be replaced with a paramagnetic or diamagnetic low viscosity liquid that is not miscible with the pumped MHD fluid.

In one embodiment, the device comprises: a magnetohydrodynamic pump and further comprises: a current density imposed by a voltage difference applied transverse to the magnetic field.

In one embodiment, the device comprises an energy conversion device and further comprises a mechanism to cause a flow of the magnetohydrodynamic fluid through the conduit, to induce a voltage difference transverse to the applied magnetic field.

A second aspect provides a method of providing a magnetohydrodynamic fluid device comprising: arranging a conduit for a flow of magnetohydrodynamic fluid therethrough under a magnetic field; providing the conduit such that it has an inner surface adjacent the flow of magnetohydrodynamic fluid, and dimensioning a plurality of structures on the inner surface to induce an apparent slip between the inner surface and the flow of magnetohydrodynamic fluid through the conduit.

In one embodiment, the plurality of structures comprise: an element extending from the inner surface.

In one embodiment, the method comprises: dimensioning the plurality of structures to support the magnetohydrodynamic fluid upon the elements extending from the inner surface, such that the magnetohydrodynamic fluid is prevented from forming a continuous contact interface with the inner surface.

In one embodiment, the method comprises: dimensioning the plurality of structures such that the magnetohydrodynamic fluid remains in direct contact with only part of the inner surface.

In one embodiment, the method comprises: dimensioning the plurality of structures in dependence upon wetting properties of the magnetohydrodynamic fluid arranged to flow through the conduit.

In one embodiment, the method comprises: spacing apart the plurality of structures in dependence upon pressure exerted on the inner surface by the flow of magnetohydrodynamic fluid through the conduit.

In one embodiment, the plurality of structures comprise: a raised or lowered portion of the inner surface.

In one embodiment, the portion comprises an elongate ridge having an axis substantially parallel to the flow of magnetohydrodynamic fluid through the conduit.

In one embodiment, the portion comprises: a column extending from the inner surface.

In one embodiment, at least one of the plurality of structures dimensioned to induce apparent slip between the inner surface and the flow of magnetohydrodynamic fluid through the conduit, comprises a portion in direct contact with the magnetohydrodynamic fluid, the portion comprising an oxide of the magnetohydrodynamic fluid.

In one embodiment, at least one of the plurality of structures dimensioned to induce apparent slip between the inner surface and the flow of magnetohydrodynamic fluid through the conduit, comprises a portion in direct contact with the magnetohydrodynamic fluid, the portion comprising a material selected to react with the magnetohydrodynamic fluid to form an intermetallic portion.

In one embodiment, the method comprises: arranging an inert gas or fluid between the plurality of structures.

In one embodiment, the device comprises: a magnetohydrodynamic pump and the method further comprises: applying a voltage difference transverse to said magnetic field to impose a current density.

In one embodiment, the device comprises an energy conversion device and the method further comprises: providing a mechanism to cause a flow of the magnetohydrodynamic fluid through said conduit, to induce a voltage difference transverse to the applied magnetic field.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

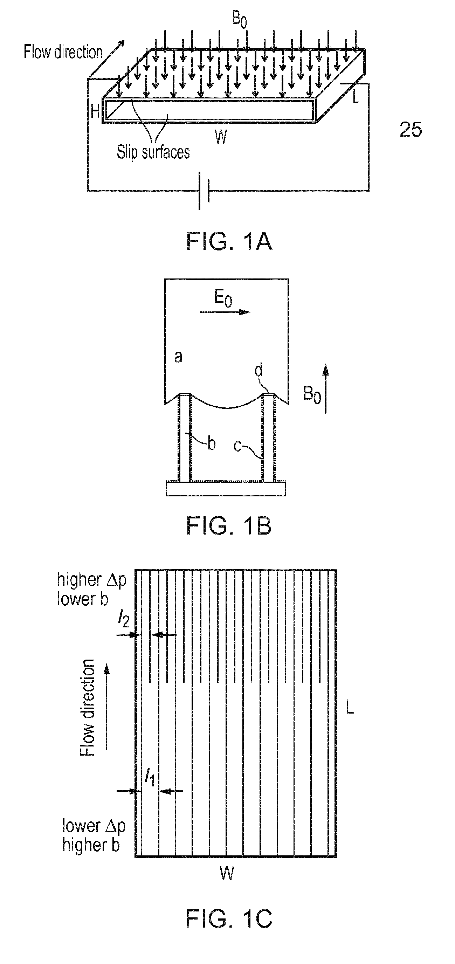

Figure 1A illustrates schematically a MHD pump in which flow of MHD fluid is generated by interaction of a fixed magnetic flux density ($B_o$) applied transverse to a current density imposed by a voltage difference;

Figure 1B illustrates schematically a structured surface on a wall of a MHD pump; and

Figure 1C illustrates schematically an example of a structured surface forming a part of a MHD pump pipe major wall.

DESCRIPTION OF THE EMBODIMENTS

Before discussing the embodiments in any more detail, first an overview will be provided.

Aspects and embodiments recognise that by fundamentally modifying the design of MHD device components it is possible to introduce apparent slip on the major walls of a pipe or conduit through which an MHD fluid passes. Those "major walls" are those walls of a conduit arranged perpendicular to an applied magnetic field.

Figure 1A illustrates an MHD device comprising a MHD pump arranged such that a flow of MHD fluid is generated by interaction of a fixed magnetic flux density ($B_o$) transverse to a current density imposed by a voltage difference.

Aspects and embodiments provide a MHD device including a structured MHD fluid conduit surface arranged such that apparent slip occurs at the interface between the MHD fluid and the conduit surface. The apparent slip condition can be achieved by providing structured surfaces that are arranged to create a "composite" interface comprising: no-slip and slip regions. That composite surface results in reduced drag and less viscous losses in the device where the MHD fluid flows over the structured surface. In, for example, an MHD cooling pump, the structured surface may be provided in the pumping section of the device.

In, for example, a MHD device such as a pump, the body force driving the flow (Lorentz force) of MHD fluid is opposed by viscous shearing forces originating from the interface of the fluid with a conduit containing the fluid. That interface forms a no-slip boundary.

As the Hartmann number, given by:

$$\mathrm{Ha} = B_0 H \sqrt{(\sigma/\mu)}$$

where: Bo is the magnetic flux density;
H is the characteristic length scale of the flow;
$\sigma$ is electrical conductivity; and
$\mu$ is the dynamic viscosity

is increased, a MHD fluid flow becomes increasingly plug-like and viscous shearing becomes increasingly localized near the flow boundaries. That localisation of viscous shearing leads to large shearing forces countering the Lorentz force.

In a large Hartmann number regime, viscous shearing at the sidewalls of an MHD fluid pipe acts to dissipate significant energy which limits both the efficiency and pumping performance of, for example, a MHD pumping mechanism. Furthermore, it will be appreciated that one effect of the miniaturisation of MHD fluid flow devices is that performance does not scale well. In particular, as pump fluid conduit dimensions are reduced, for example, for the purposes of integration on a chip or into an electronic device, the MHD fluid flow is likely to become subject to increased viscous losses.

Typically, the major walls of a conduit for containing MDH fluid within a device such as a pump are made from a ceramic or other non-electrically conductive material. One example MHD fluid, Galinstan, has physical properties such that it does not wet those conduit materials. Galinstan displays an advancing contact angle of ~150° on such materials.

Aspects and embodiments recognise that MHD fluid conduits for inclusion in MHD devices can be provided to have various structures which are arranged to allow for slip at the interface between the MHD fluid and the conduit surface.

In some embodiments, appropriately dimensioned and spaced structures are provided on a conduit surface. Those structures can be pillars, ridges, dots, elongate elements and similar and may comprise a combination of different structures.

In some embodiments, a conduit may be structured such that an inert gas layer can be trapped between the surface of the MHD fluid conduit wall and the MHD fluid itself to generate an apparent slip. In some embodiments, the inert gas can be replaced with a paramagnetic or diamagnetic low viscosity liquid that is not miscible with the pumped MHD fluid.

In some embodiments, the tops of at least some of the provided conduit surface structures may be coated with a thin layer of an appropriate oxide or inter metallic. For example, if the MHD fluid for use with a device is galinstan, the "tip" of at least some of the provided structures may comprise galinstan oxide or a metal that reacts with galinstan to form an inter-metallic. Provision of such an additional coating on at least some structure tips can act to induce a local receding contact less than 90° between the MHD fluid and the structure and fluid interface. Such an arrangement may act to stabilize the wetting state of the composite conduit surface against pressures in an inert gas or liquid layer trapped between the MHD fluid and the provided structures which is larger than that of the pressure of the MHD fluid flow.

In some embodiments, the surfaces, for example, sides and base, of each provided primary structural feature forming part of the composite conduit surface may be coated with a smaller length scale roughness features. Those roughness features may be configured such that they generate large apparent contact angles and stabilize the fluid wetting state when subjected to pressures in the MHD fluid flow larger than the pressure in any provided trapped inert gas or liquid layer.

The efficacy of creating apparent slip at the flow boundaries is illustrated in the flowing specific example in which a MHD pump is considered. According to one arrangement, an MHD pump is used to drive galinstan in a single phase cooling device. Ghoshal et al. present device performance data for a MHD pump operating at Ha = 41.5. The gap between magnets in the Ghoshal arrangement was 2H = 2.4 mm and generated a maximum pressure head of $\Delta p$ = 25 kPa.

An analogous arrangement can be arranged in which a structured MHD fluid conduit surface comprising parallel ridges with a solid fraction of 5% is provided and in which it is assumed a galinstan MHD fluid has an advancing angle of $\theta_a$ = 170°. A maximum ridge spacing of 1 = 51.2 $\mu$m can be calculated, that ridge spacing being that spacing which prevents initiation of wetting at the pump exit. That calculated ridge spacing corresponds to a nominal apparent slip length of b = 41.5 $\mu$m or a scaled slip length of b/H = 0.034.

Modified Hartmann flow theory with slip boundary conditions allows for calculation of an enhancement in flowrate at a given pressure rise in the pump gained from adding apparent slip in comparison to the no-slip case of $Q_s/Q_{ns}$ = 2.57.

It has been recognised that some embodiments may be configured to further improve MHD device performance and operation. According to such arrangements, the apparent slip structures may be designed or arranged on a surface to have a varying length scale, that varying length scale being selected to match pressure conditions experienced by an MHD fluid along the pump section. Accordingly, at the entrance to the pump where pressure is low, the provided structures can have a larger spacing (*l*) to provide a larger apparent slip length. Towards the end of the pump section, where pressures reach their maximum, the structures can be spaced closer together to prevent surface wetting. The structure spacing can be gradually varying or may be changed in one or more discrete steps.

Figure 1B illustrates schematically a structured surface on a wall of a MHD pump. In the example arrangement shown in Figure 1B, a structured surface is provided on at least one major wall of a MHD pump. The wall upon which the structure is provided is perpendicular to a provided B field. In the arrangement shown, galinstan (a) flows perpendicular to the page and is supported on structures (b) coated on their sides and base by a smaller scale structure (c). An inert gas layer resides between the galinstan flow and the wall. The galinstan is effectively "pinned" to the structures by a thin layer of galinstan oxide or metal that forms an inter-metallic (d) with galinstan.

Figure 1C illustrates schematically an example of a structured surface forming a part of a MHD pump pipe major wall. In the arrangement shown, a structured surface comprises an MHD pump major wall. The surface structures provided at the inlet to the pump are spaced further apart ($l_1$) due to lower MHD fluid pressures allowing for larger apparent slip lengths. At the exit of the pump, the pressure rises and the spacing of the structures is reduced ($l_2$) in order to maintain the non-wetting state. That reduced spacing of the provided structures results in a reduced slip length, but can still provide an efficiency and operational improvement compared to an arrangement in which there is no slip at a boundary.

Some aspects provide for a device in which the MHD effect can be used for direct energy conversion. In particular, if a flow of a MHD fluid through a conduit is induced an electrical current flow is created. In this context, the MHD effect can be used for solid-state energy conversion in situations where an environmental energy source is available to drive the flow. By including structured surfaces in the generation region, the efficiency of the energy conversion process can be increased by significantly reducing friction losses.

Aspects and embodiments may enable better performance and efficiency of liquid metal based pumps and energy harvesters using the MHD principle. From a thermal management perspective, advancing MHD pumping technology can enable future photonic integrated circuits (PICs) and advanced laser cooling by providing reliable, high performance pumping for liquid cooling in a small scale form factor which can be a major bottleneck. Pumping technology integrated with liquid-cooled thermal management may be important for enabling next generation products that will in turn support the exponential growth in data traffic expected over the coming years.

Aspects and embodiments may provide a means for efficient pumping or direct power generation with no moving parts. Aspects described can extend the useful range of MHD devices to smaller length scales, thus allowing for compact integration.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A magnetohydrodynamic fluid device comprising:

   a conduit for a flow of magnetohydrodynamic fluid therethrough under a magnetic field;
   said conduit having an inner surface adjacent said flow of magnetohydrodynamic fluid, said inner surface comprising a plurality of structures dimensioned to induce apparent slip between said inner surface and said flow of magnetohydrodynamic fluid through said conduit.

2. A device according to claim 1, wherein said plurality of structures comprise: an element extending from said inner surface.

3. A device according to claim 1 or claim 2, wherein said plurality of structures are dimensioned to support said magnetohydrodynamic fluid upon said elements extending from said inner surface, such that the magnetohydrodynamic fluid is prevented from forming a continuous contact interface with said inner surface.

4. A device according to any preceding claim, further comprising: a magnetic element configured to generate a magnetic field arranged perpendicular to said flow of magnetohydrodynamic fluid through said conduit.

5. A device according to any preceding claim, wherein said plurality of structures are dimensioned in dependence upon wetting properties of said magnetohydrodynamic fluid arranged to flow through said conduit.

6. A device according to any preceding claim, wherein said plurality of structures are spaced apart in dependence upon pressure exerted on said inner surface by said flow of magnetohydrodynamic fluid through said conduit.

7. A device according to any preceding claim, wherein said plurality of structures comprise a raised or lowered portion of said inner surface.

8. A device according to claim 7, wherein said portion comprises an elongate ridge having an axis substantially parallel to said flow of magnetohydrodynamic fluid through said conduit.

9. A device according to claim 7, wherein said portion comprises: a column extending from said inner surface.

10. A device according to any preceding claim, wherein at least one of said plurality of structures dimensioned to induce apparent slip between said inner surface and said flow of magnetohydrodynamic fluid through said conduit, comprises a portion in direct contact with said magnetohydrodynamic fluid, said portion comprising an oxide of said magnetohydrodynamic fluid.

11. A device according to any preceding claim, wherein at least one of said plurality of structures dimensioned to induce apparent slip between said inner surface and said flow of magnetohydrodynamic fluid through said conduit, comprises a portion in direct contact with said magnetohydrodynamic fluid, said portion comprising a material selected to react with said magnetohydrodynamic fluid to form an intermetallic portion.

12. A device according to any preceding claim, wherein said device further comprises: an inert gas or fluid arranged between said plurality of structures.

13. A device according to any one of claims 1 to 12, wherein said device comprises a magnetohydrodynamic pump and further comprises: a current density imposed by a voltage difference applied transverse to said magnetic field.

14. A device according to any one of claims 1 to 12, wherein said device comprises an evergy conversion device and further comprises a mechanism to cause a flow of said magnetohydrodynamic fluid through said conduit, to induce a voltage difference transverse to said applied magnetic field.

15. A method of providing a magnetohydrodynamic fluid device comprising:

arranging a conduit for a flow of magnetohydrodynamic fluid therethrough under a magnetic field;
providing said conduit such that it has an inner surface adjacent said flow of magnetohydrodynamic fluid, dimensioning a plurality of structures on said inner surface to induce an apparent slip between said inner surface and said flow of magnetohydrodynamic fluid through said conduit.

**FIG. 1A**

**FIG. 1B**

**FIG. 1C**

Europäisches
Patentamt

European
Patent Office

Office européen
des brevets

# EUROPEAN SEARCH REPORT

Application Number

EP 14 30 6262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GHOSHAL U ET AL: "High-performance liquid metal cooling loops", SEMICONDUCTOR THERMAL MEASUREMENT AND MANAGEMENT SYMPOSIUM, 2005 IEEE TWENTY FIRST ANNUAL IEEE SAN JOSE, CA, USA MARCH 15-17, 2005, PISCATAWAY, NJ, USA,IEEE, 15 March 2005 (2005-03-15), pages 16-19, XP010781481, DOI: 10.1109/STHERM.2005.1412153 ISBN: 978-0-7803-8985-4 * the whole document * ----- | 1-9, 12-15 | INV. F15D1/00 H02K44/12 H02K44/04 |
| Y | WOOLFORD B ET AL: "Liquid flow through microchannels with grooved walls under wetting and superhydrophobic conditions", MICROFLUIDICS AND NANOFLUIDICS, SPRINGER, BERLIN, DE, vol. 7, no. 1, 19 November 2008 (2008-11-19), pages 121-135, XP019667831, ISSN: 1613-4990 | 1-9, 12-15 | |
| A | * page 121 - page 123 * ----- | 10,11 | |
| A | MARC HODES ET AL: "Cooling potential of galinstan-based minichannel heat sinks", THERMAL AND THERMOMECHANICAL PHENOMENA IN ELECTRONIC SYSTEMS (ITHERM), 2012 13TH IEEE INTERSOCIETY CONFERENCE ON, IEEE, 30 May 2012 (2012-05-30), pages 297-302, XP032453292, DOI: 10.1109/ITHERM.2012.6231443 ISBN: 978-1-4244-9533-7 * page 297 - page 299 * ----- -/-- | 1,4,13, 15 | |

**TECHNICAL FIELDS SEARCHED (IPC)**

H02K
F15D

The present search report has been drawn up for all claims

| Place of search | Date of completion of the search | Examiner |
|---|---|---|
| Munich | 20 May 2015 | Strasser, Thorsten |

EPO FORM 1503 03.82 (P04C01)

Europäisches
Patentamt

European
Patent Office

Office européen
des brevets

## EUROPEAN SEARCH REPORT

Application Number

EP 14 30 6262

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RYAN ENRIGHT ET AL: "Effects of Interfacial Position on Drag Reduction in a Superhydrophobic Microchannel", ASME 2008 6TH INTERNATIONAL CONFERENCE ON NANOCHANNELS, MICROCHANNELS, AND MINICHANNELSDARMSTADT, GERMANY, JUNE 23-25, 2008,, 23 June 2008 (2008-06-23), pages 835-845, XP009184275, ISBN: 0-7918-4834-5 * the whole document * ----- | 1-3,5-12 | |

TECHNICAL FIELDS
SEARCHED      (IPC)

The present search report has been drawn up for all claims

| Place of search | Date of completion of the search | Examiner |
|---|---|---|
| Munich | 20 May 2015 | Strasser, Thorsten |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P04C01)